# EUROPÄISCHE PATENTSCHRIFT

(11) **EP 2 599 593 B1**
(45) Veröffentlichungstag und Bekanntmachung des Hinweises auf die Patenterteilung: **27.05.2020**
(21) Anmeldenummer: 12192175.3
(22) Anmeldetag: 12.11.2012
(51) Int. Cl.: B25F 5/02

(54) **Handwerkzeugmaschine mit einem trommelartigen Werkzeugwechselmagazin**
Hand-held power tool with a drum-like tool change magazine
Machine-outil à main dotée d'un magasin de changement d'outil en forme de tambour

(30) Priorität: 29.11.2011 DE 102011087297
(43) Veröffentlichungstag der Anmeldung: 05.06.2013
(73) Patentinhaber: Robert Bosch GmbH, 70442 Stuttgart (DE)
(72) Erfinder: Nagy, Attila, 3521 Miscolc-Slirma (HU)

(56) Entgegenhaltungen:
- CN-Y- 201 055 983
- DE-A1- 4 302 880
- US-A- 4 976 175
- US-A- 5 022 131
- US-A1- 2009 298 658
- US-A1- 2010 279 839

## Beschreibung

### Stand der Technik

Die Erfindung betrifft eine Handwerkzeugmaschine mit einer zur Aufnahme eines mit einer Außenmehrkant-Kupplung versehenen Werkzeugs ausgebildeten Werkzeugaufnahme, die eine zumindest abschnittsweise mit einem Drehmitnahmeprofil versehene Innenaufnahme aufweist und an einem zugeordneten Werkzeuggehäuse vorgesehen ist, in dem ein trommelartiges Werkzeugwechselmagazin mit mindestens einer Werkzeugkammer zur Aufbewahrung des Werkzeugs angeordnet ist, die mit der Werkzeugaufnahme fluchtend ausrichtbar ist, um ein Überschieben des Werkzeugs von der Werkzeugkammer in die Innenaufnahme oder von der Innenaufnahme in die Werkzeugkammer zu ermöglichen. Einige Bespiele sind aus der US5022131A, US2009298658A1 und US2010279839A1 bekannt.

Aus der DE 10 2006 059 688 A1 ist eine derartige Handwerkzeugmaschine bekannt, die ein in einem zugeordneten Werkzeuggehäuse drehbeweglich gelagertes Werkzeugwechselmagazin aufweist, das mit einer Vielzahl von mit unterschiedlichen Werkzeugen versehenen Werkzeugkammern versehen ist und um eine zugeordnete Drehachse in unterschiedliche Werkzeugwechselpositionen verdrehbar ist. In diesen Werkzeugwechselpositionen ist jeweils eine der Werkzeugkammern fluchtend mit einer zugeordneten Werkzeugaufnahme ausgerichtet, sodass ein in der Werkzeugkammer angeordnetes Werkzeug mit einem im Werkzeuggehäuse verschiebbar angeordneten, stangenförmigen Überschiebeelement in die Werkzeugaufnahme und aus der Werkzeugaufnahme wieder zurück in das Werkzeugwechselmagazin überschiebbar ist.

Nachteilig am Stand der Technik ist, dass das z. B. mit einer Außenmehrkant-Kupplung versehene Werkzeug beim Überschieben von der Werkzeugkammer in die z. B. mit einer Innenmehrkant-Aufnahme versehene Werkzeugaufnahme verkanten kann. Dies kann zu einer Blockierung und/oder Beschädigung der Handwerkzeugmaschine führen.

### Offenbarung der Erfindung

Eine Aufgabe der Erfindung ist es daher, eine neue Handwerkzeugmaschine mit einem trommelartigen Werkzeugwechselmagazin bereitzustellen, bei der ein betriebssicheres Überschieben eines Werkzeugs aus einer entsprechenden Werkzeugkammer in eine zugeordnete Werkzeugaufnahme ermöglicht wird.

Dieses Problem wird gelöst durch eine Handwerkzeugmaschine gemäß Anspruch 1.

Die Erfindung ermöglicht somit die Bereitstellung einer Handwerkzeugmaschine mit einem trommelartigen Werkzeugwechselmagazin und einer Werkzeugaufnahme, bei der ein Verkanten einer Außenmehrkant-Kupplung eines aus dem Werkzeugwechselmagazin in die Werkzeugaufnahme zu überschiebenden Werkzeugs beim Überschieben sicher und zuverlässig verhindert werden kann.

Gemäß einer Ausführungsform ist das Ausrichtelement dazu ausgebildet, das Werkzeug um dessen Längsachse in eine Drehstellung zu verdrehen, in der die Außenmehrkant-Kupplung und das Drehmitnahmeprofil der Innenaufnahme zumindest im Wesentlichen deckungsgleich angeordnet sind.

Somit kann die Bereitstellung einer Handwerkzeugmaschine ermöglicht werden, bei der beim Überschieben des Werkzeugs von der Werkzeugkammer in die Innenaufnahme ein Einschieben der Außenmehrkant-Kupplung in das Drehmitnahmeprofil der Innenaufnahme auf einfache Art und Weise ermöglicht werden kann.

Das Ausrichtelement weist gemäß Anspruch 1 ein Federelement auf, das dazu ausgebildet ist, die Außenmehrkant-Kupplung zur Ausrichtung mit einer zugeordneten Federkraft zu beaufschlagen.

Somit kann die Bereitstellung eines unkomplizierten und kostengünstigen Ausrichtelements ermöglicht werden.

Das Federelement ist bevorzugt nach Art einer Bügelfeder ausgebildet.

Somit kann die Bereitstellung eines stabilen und robusten Federelements ermöglicht werden.

Gemäß Anspruch 1 weist die Werkzeugaufnahme mindestens eine radiale Öffnung auf, in die das Federelement zumindest abschnittsweise eingreift.

Die Erfindung ermöglicht somit die Bereitstellung einer Handwerkzeugmaschine mit einem Ausrichtelement, das auf einfache Art und Weise mit einer zugeordneten Werkzeugaufnahme koppelbar ist.

Die radiale Öffnung ist bevorzugt dazu ausgebildet, einen Zugriff des Federelements auf die Außenmehrkant-Kupplung zu ermöglichen.

Somit kann eine von dem Federelement zur Ausrichtung des Werkzeugs auszuübende Federkraft sicher und zuverlässig auf dessen Außenmehrkant-Kupplung übertragen werden.

Bevorzugt weist das Federelement mindestens einen Federarm auf, der zumindest abschnittsweise in die radiale Öffnung eingreift.

Somit kann eine einfache und unkomplizierte Kopplung des Federelements mit einer zugeordneten Werkzeugaufnahme ermöglicht werden.

Der mindestens eine Federarm ist bevorzugt dazu ausgebildet, die Außenmehrkant-Kupplung in der Innenaufnahme der Werkzeugaufnahme mit einer radial einwärts gerichteten Federkraft zu beaufschlagen.

Somit kann eine effiziente und wirksame Kraftübertragung ermöglicht werden.

Gemäß Anspruch 1 weist das Federelement mindestens einen ersten und einen zweiten Federarm auf, die über einen Verbindungsarm miteinander verbunden sind und durch eine elastische Verformung des Verbindungsarms in einander entgegengesetzte Richtungen verbiegbar sind.

Die Erfindung ermöglicht somit die Bereitstellung eines einfachen und robusten Ausrichtelements.

Bevorzugt weisen der erste und zweite Federarm im unverbogenen Zustand des Federelements eine Beabstandung voneinander auf, die zumindest einer Beabstandung zwischen zwei gegenüberliegenden Seitenflächen der Außenmehrkant-Kupplung entspricht.

Somit kann auf einfache Art und Weise eine zuverlässige und betriebssichere Funktionalität des Ausrichtelements gewährleistet werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische, teilweise geschnittene Seitenansicht einer Handwerkzeugmaschine mit einem trommelartigen Werkzeugwechselmagazin und einer Werkzeugaufnahme gemäß einer Ausführungsform,
Fig. 2 eine teilweise geschnittene Seitenansicht der Werkzeugaufnahme von Fig. 1 mit einem Ausrichtelement gemäß einer ersten Ausführungsform,
Fig. 3 eine Schnittansicht der Werkzeugaufnahme von Fig. 2 mit dem darin angeordneten Werkzeug von Fig. 1,
Fig. 4 eine perspektivische Rückansicht der Werkzeugaufnahme von Fig. 1 bis 3, und
Fig. 5 eine schematische Ansicht mit dem Ausrichtelement von Fig. 2 bis 4 und dem Werkzeug von Fig. 1 bis 3.

### Beschreibung der Ausführungsbeispiele

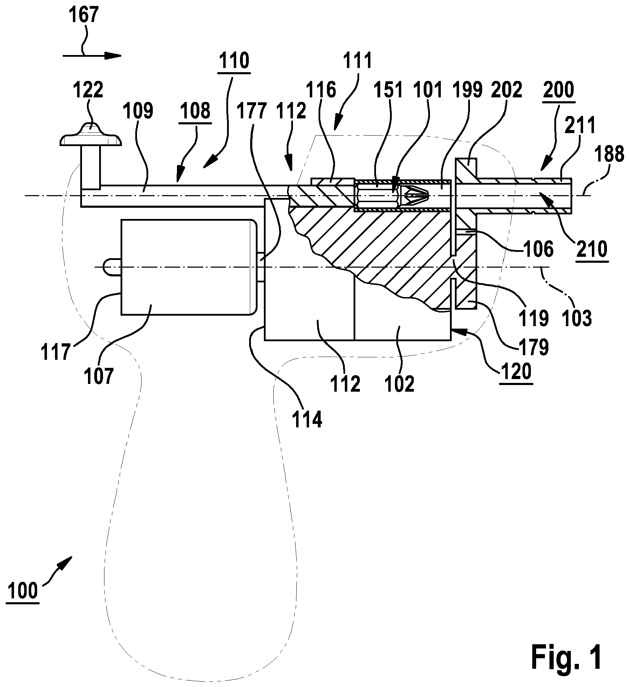

Fig. 1 zeigt beispielhaft eine handhaltbare, motorisch antreibbare Werkzeugmaschine 100, die nachfolgend auch als "Handwerkzeugmaschine" bezeichnet wird und ein Werkzeuggehäuse 111 aufweist, in dem ein trommelartiges Werkzeugwechselmagazin 120 um eine Drehachse 103 drehbar angeordnet ist. Das trommelartige Werkzeugwechselmagazin 120 ist beispielhaft hohlzylinderförmig mit einem ringartigen Mantelkörper 102 ausgebildet, in dem eine Vielzahl von Werkzeugkammern vorgesehen sind. In den Werkzeugkammern können z. B. Einsatzwerkzeuge angeordnet sein, wobei z. B. in allen Werkzeugkammern unterschiedliche Einsatzwerkzeuge vorgesehen sind. Zwecks Klarheit und Übersichtlichkeit der Zeichnung ist in Fig. 1 nur eine einzelne Werkzeugkammer angedeutet und mit dem Bezugszeichen 199 gekennzeichnet. In dieser Werkzeugkammer 199 ist beispielhaft ein Einsatzwerkzeug 101 angeordnet, das nachfolgend auch als das "Werkzeug" 101 bezeichnet wird.

Die Handwerkzeugmaschine 100 ist illustrativ nach Art eines sogenannten "Bit-Schraubers" zur Handhabung von sogenannten "Schrauberbits" ausgebildet. Es wird jedoch darauf hingewiesen, dass die vorliegende Erfindung nicht auf derartige Bit-Schrauber eingeschränkt ist, sondern vielmehr bei allen Werkzeugmaschinen Anwendung finden kann, bei denen ein um eine Längsachse drehbares, trommelartiges Wechselmagazin Anwendung finden kann, unabhängig davon, ob in dem Wechselmagazin Schrauberbits oder andere Wechselobjekte aufbewahrt werden oder ob die Werkzeugmaschine handhaltbar ist oder nicht.

Gemäß einer Ausführungsform ist an dem Werkzeuggehäuse 111 eine Werkzeugaufnahme 200 zur Aufnahme des Werkzeugs 101 angeordnet, die um eine zugeordnete Längs- bzw. Drehachse 188 drehbar ist. Illustrativ ist die Werkzeugaufnahme 200 zum Antreiben des Werkzeugs 101 über eine Getriebeverzahnung 106 mit einer Abtriebswelle 119 eines Getriebes 112 gekoppelt, das beispielhaft in einem Gehäuse 114 angeordnet ist. Hierzu ist an der Abtriebswelle 119 illustrativ ein Antriebszahnrad 179 vorgesehen, das in der Getriebeverzahnung 106 mit einem an der Werkzeugaufnahme 200 vorgesehenen Abtriebszahnrad 202 zusammenwirkt. Die Abtriebswelle 119 wird z. B. durch eine Motorwelle 177 eines mit dem Getriebe 112 gekoppelten Antriebsmotors 107 in Drehungen versetzt, der beispielhaft in einem zugeordneten Motorgehäuse 117 angeordnet ist, wobei das Motorgehäuse 117 und das Getriebegehäuse 114 beispielhaft in dem Werkzeuggehäuse 111 angeordnet und befestigt sind.

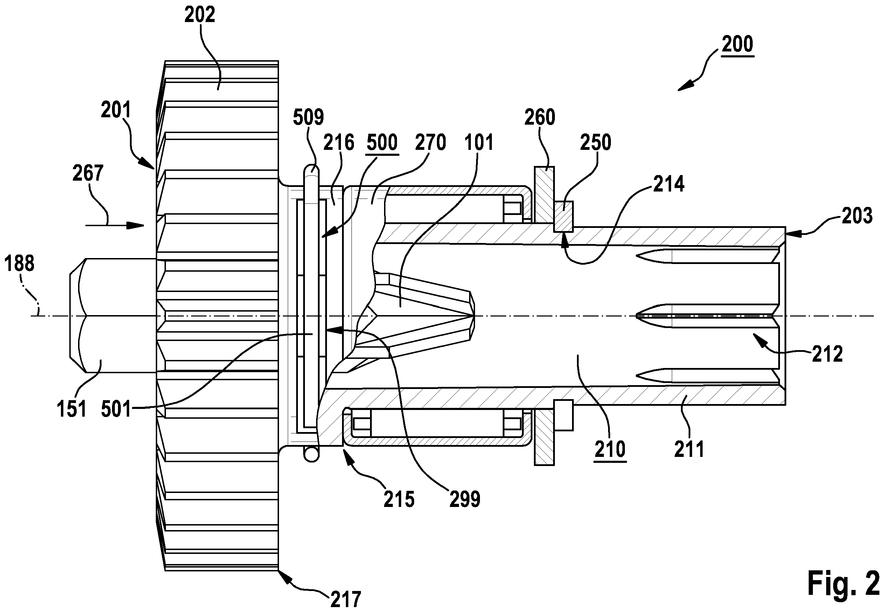

Illustrativ weist die Werkzeugaufnahme 200 einen hohlzylinderförmigen Werkzeugaufnahmeabschnitt 211 auf, in dem beispielhaft eine mit einem Drehmitnahmeprofil (212 in Fig. 2), z. B. einem Innenmehrkantprofil, versehene Innenaufnahme 210 ausgebildet ist, in die das z. B. mit einer korrespondierenden Außenmehrkant-Kupplung 151 versehene Werkzeug 101 aus der Werkzeugkammer 199 zur drehfesten Verbindung mit der Werkzeugaufnahme 200 einschiebbar ist. Zum Überschieben des Werkzeugs 101 aus der Werkzeugkammer 199 in die Innenaufnahme 210 der Werkzeugaufnahme 200 und aus der Innenaufnahme 210 in die Werkzeugkammer 199 ist ein Überschiebemechanismus 110 vorgesehen. Dieser weist beispielhaft ein Überschiebeelement 108 auf, das beispielhaft nach Art einer über ein Betätigungselement 122 betätigbaren Schiebestange 109 ausgebildet ist, die z. B. in einer am Getriebegehäuse 114 vorgesehenen Führung 116 geführt wird und deren dem Werkzeug 101 zugewandtes axiales Ende zur magnetischen Verbindung mit dem Werkzeug 101 z. B. magnetisch ausgebildet ist. Das Betätigungselement 122 ist illustrativ in einer am Werkzeuggehäuse 111 vorgesehenen Öffnung 112 parallel zur Drehachse 188 der Werkzeugaufnahme 200 axial verschiebbar.

Bei einem beispielhaften Werkzeugwechsel der Handwerkzeugmaschine 100 wird das Werkzeugwechselmagazin 120 um die Drehachse 103 in eine Werkzeugwechselposition verdreht, in der z. B. die Werkzeugkammer 199 mit dem Werkzeug 101 fluchtend mit der Werkzeugaufnahme 200 bzw. deren Innenaufnahme 210 ausgerichtet ist. Dann wird das Betätigungselement 122 in Richtung eines Pfeils 167 in der Öffnung 112 von seiner - in Fig. 1 - hinteren axialen Endstellung bis zu einer - in Fig. 1 - vorderen axialen Endstellung verschoben, in der die Schiebestange 109 durch die Werkzeugkammer 199 durchgreift und das Werkzeug 101 in der Innenaufnahme 210 der Werkzeugaufnahme 200 blockiert. Zum Überschieben des Werkzeugs 101 aus der Werkzeugaufnahme 200 in die Werkzeugkammer 199 wird dann das Betätigungselement 122 in einer zum Pfeil 167 entgegengesetzten Richtung in der Öffnung 112 axial in seine hintere axiale Endstellung zurück verschoben.

Es wird jedoch darauf hingewiesen, dass die prinzipielle Funktionsweise und der Aufbau der Handwerkzeugmaschine 100 bereits aus der DE 10 2006 059 688 A1 bekannt sind, die darüber hinaus z. B. Verstellmittel zum Drehen des Werkzeugwechselmagazins 120 um die Drehachse 103 beschreibt, die eine fluchtende Ausrichtung der Werkzeugkammer 199 mit der Werkzeugaufnahme 200 ermöglichen. Deshalb wird die Offenbarung der DE 10 2006 059 688 A1 zur Vereinfachung der vorliegenden Beschreibung explizit in diese aufgenommen.

Fig. 2 zeigt die um die Drehachse 188 drehbare und mit dem hohlzylinderförmigen Werkzeugaufnahmeabschnitt 211 versehene Werkzeugaufnahme 200 von Fig. 1 bei einem beispielhaften Überschieben des Werkzeugs 101 von Fig. 1 in Richtung eines Pfeils 267 in die Werkzeugaufnahme 200. Diese weist illustrativ an einem ersten axialen Endbereich 201 das Abtriebszahnrad 202 von Fig. 1 auf. An einem gegenüberliegenden, zweiten axialen Endbereich 203 ist beispielhaft ein Drehmitnahmeprofil 212, z. B. ein Innenmehrkantprofil, der Innenaufnahme 210 von Fig. 1 zur verdrehgesicherten Aufnahme der Außenmehrkant-Kupplung 151 des Werkzeugs 101 ausgebildet.

Illustrativ geht die Werkzeugaufnahme 200 im Bereich einer ersten Schulter 217 vom Abtriebszahnrad 202 in einen ersten verjüngten Bereich 216 über, der an einer zweiten Schulter 215 in den Werkzeugaufnahmeabschnitt 211 übergeht. Auf dem Werkzeugaufnahmeabschnitt 211 ist illustrativ ein nach Art eines Nadellagers ausgebildetes Wälzlager 270 zur drehbeweglichen Lagerung der Werkzeugaufnahme 200 in dem Werkzeuggehäuse 111 von Fig. 1 angeordnet. Das Wälzlager 270 ist beispielhaft zwischen dem ersten verjüngten Bereich 216 und einer Blockierscheibe 260 axial unbeweglich fixiert. Die Blockierscheibe 260 wird ihrerseits von einem Sicherungsring 250, z. B. einem C-Ring, der in einer am Werkzeugaufnahmeabschnitt 211 ausgebildeten Ringnut 214 befestigt ist, in axialer Richtung der Werkzeugaufnahme 200 blockiert.

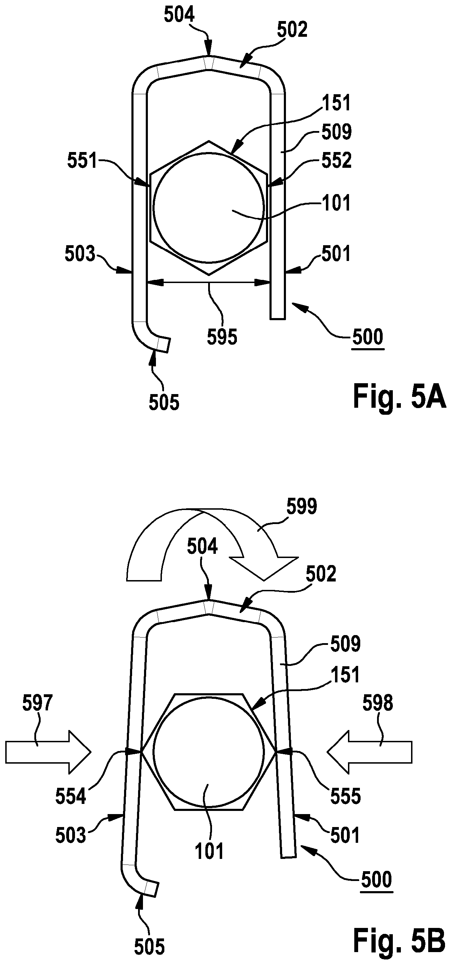

Im ersten verjüngten Bereich 216 ist gemäß einer Ausführungsform ein Ausrichtelement 500 zur Ausrichtung der Außenmehrkant-Kupplung 151 des Werkzeugs 101 beim Überschieben des Werkzeugs 101 entlang der Längsachse 188 der Werkzeugaufnahme 200 in die Innenaufnahme 210 vorgesehen, um ein Verkanten der Außenmehrkant-Kupplung 151 am Drehmitnahmeprofil 212 zu verhindern und somit ein Einschieben der Außenmehrkant-Kupplung 151 in das Drehmitnahmeprofil 212 der Innenaufnahme 210 zu ermöglichen. Hierbei ist das Ausrichtelement 500 illustrativ dazu ausgebildet, das Werkzeug 101 um die Längsachse 188 in eine Drehstellung zu verdrehen, in der die Außenmehrkant-Kupplung 151 und das Drehmitnahmeprofil 212 der Innenaufnahme 210 zumindest im Wesentlichen deckungsgleich angeordnet sind, wie unten bei Fig. 5 beschrieben.

Gemäß einer Ausführungsform weist das Ausrichtelement 500 ein Federelement 509 auf, das dazu ausgebildet ist, die Außenmehrkant-Kupplung 151 des Werkzeugs 101 zur Ausrichtung mit einer zugeordneten Federkraft zu beaufschlagen. Das Federelement 509 ist z. B. nach Art einer Bügelfeder ausgebildet, die zumindest abschnittsweise in mindestens eine im ersten verjüngten Bereich 216 ausgebildete und dem Ausrichtelement 500 zugeordnete, radiale Öffnung 299 eingreift, um über diese radiale Öffnung 299 auf die Außenmehrkant-Kupplung 151 zuzugreifen. Illustrativ hat das Federelement 509 mindestens einen ersten Federarm 501, der zumindest abschnittsweise in die radiale Öffnung 299 eingreift, um die Außenmehrkant-Kupplung 151 in der Innenaufnahme 210 der Werkzeugaufnahme 200 mit einer radial einwärts gerichteten Federkraft zu beaufschlagen, wie unten bei Fig. 5B beschrieben.

Es wird darauf hingewiesen, dass bei der in Fig. 2 gezeigten Drehstellung des Werkzeugs 101 dessen Außenmehrkant-Kupplung 151 bei einem unausgerichteten Überschieben des Werkzeugs 101 in die Werkzeugaufnahme 200 beispielhaft an deren Drehmitnahmeprofil 212 verkanten würde. Um dies zu verhindern, wird die Außenmehrkant-Kupplung 151 beim Überschieben von dem Ausrichtelement 500 wie unten bei Fig. 5B beschrieben ausgerichtet.

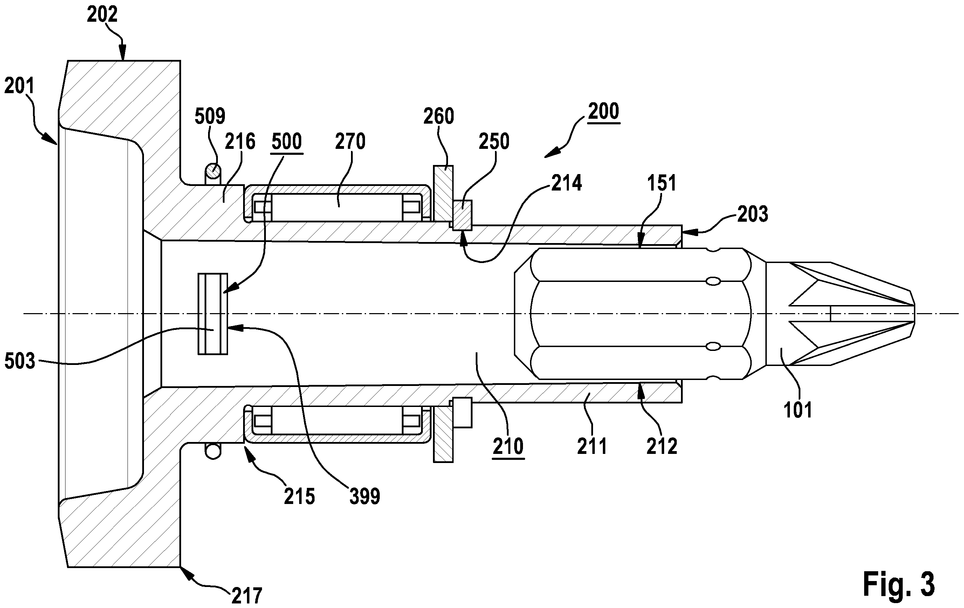

Fig. 3 zeigt die Anordnung von Fig. 2 nach einem Überschieben des Werkzeugs 101 in die Innenaufnahme 210 der Werkzeugaufnahme 200, in deren Drehmitnahmeprofil 212 die Außenmehrkant-Kupplung 151 nach dem Überschieben verdrehgesichert gelagert ist. Fig. 3 verdeutlicht einen illustrativen, zweiten Federarm 503 des Federelements 509, der beispielhaft in eine weitere, dem Ausrichtelement 500 von Fig. 2 zugeordnete, radiale Öffnung 399 im ersten verjüngten Bereich 216 eingreift.

Es wird darauf hingewiesen, dass die radiale Öffnung 399 und die radiale Öffnung 299 von Fig. 2 gemäß einer Ausführungsform derart ausgebildet sind, dass die Federarme 503 bzw. 501 von Fig. 2 nach einer entsprechenden Montage des Federelements 509 am ersten verjüngten Bereich 216 etwa parallel zueinander ausgerichtet sind. Anders ausgedrückt sind die den Federarmen 503 bzw. 501 von Fig. 2 jeweils zugeordneten Längsachsen nach der Montage etwa parallel zueinander ausgerichtet.

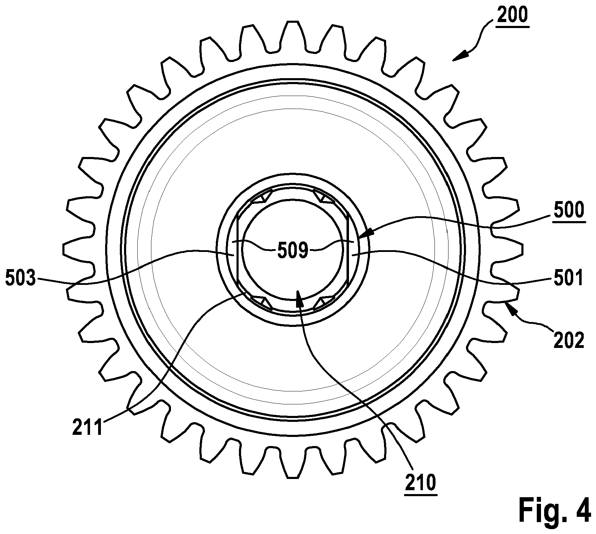

Fig. 4 zeigt die Werkzeugaufnahme 200 von Fig. 2 und 3 mit dem Ausrichtelement 500 von Fig. 2 und 3. Fig. 4 verdeutlicht eine parallele Ausrichtung der Längsachsen der durch die radialen Öffnungen (299 in Fig. 2 und 399 in Fig. 3) durchgreifenden Federarme 501, 503 des Federelements 509 von Fig. 2 und 3.

Fig. 5A und 5B zeigen schematisch die Außenmehrkant-Kupplung 151 des Werkzeugs 101 von Fig. 1 bis 3 und das Federelement 509 des Ausrichtelements 500 von Fig. 2 bis 4 zur Verdeutlichung der Funktionsweise des Ausrichtelements 500. Das Federelement 509 weist wie bei Fig. 2 und 3 beschrieben den ersten und zweiten Federarm 501, 503 auf, die gemäß einer Ausführungsform über einen spitzbogenförmig ausgebildeten Verbindungsarm 502 miteinander verbunden und durch eine elastische Verformung dieses Verbindungsarms 502 in einander entgegengesetzte Richtungen verbiegbar sind. Dieser Verbindungsarm 502 weist beispielhaft eine etwa zentrale und illustrativ abgerundete Spitze 504 auf, die eine Verschwenk- bzw. Biegestelle für die Federarme 501, 503 festlegt. Der Federarm 503 weist illustrativ ein abgerundetes Ende 505 auf.

Fig. 5A zeigt den ersten und zweiten Federarm 501, 503 des Federelements 509 im unverbogenen bzw. unausgelenkten Zustand des Federelements 509, der nachfolgend auch als "Ruhezustand" des Federelements 509 bezeichnet wird. In diesem Ruhezustand weisen die Federarme 501, 503 eine mit 595 gekennzeichnete Beabstandung voneinander auf, die zumindest einer Beabstandung zwischen zwei gegenüberliegenden Seitenflächen der Außenmehrkant-Kupplung 151 entspricht. Beispielhaft ist eine im Bereich des Federarms 501 angeordnete, erste Seitenfläche der Außenmehrkant-Kupplung 151 mit 552 gekennzeichnet und eine im Bereich des Federarms 503 angeordnete, der ersten Seitenfläche 552 diametral gegenüberliegende, zweite Seitenfläche der Außenmehrkant-Kupplung 151 ist mit 551 gekennzeichnet.

Es wird darauf hingewiesen, dass das Werkzeug 101 in Fig. 5A beispielhaft in einer Drehstellung gezeigt ist, in der dessen Außenmehrkant-Kupplung 151 eine zum Einschieben in das Drehmitnahmeprofil 212 von Fig. 2 und 3 erforderliche Ausrichtung aufweist. Somit ist ein Ausrichten der Außenmehrkant-Kupplung 151 nicht erforderlich. Dementsprechend kann das Werkzeug 101 durch das Federelement 509 durchgeschoben werden - in Fig. 5A in die Blattebene hinein oder aus dieser heraus - ohne das die Federarme 501, 503 aufgrund ihrer Beabstandung 595 eine zugeordnete Federkraft auf die Außenmehrkant-Kupplung 151 ausüben können.

Fig. 5B zeigt die Anordnung von Fig. 5A bei einem Ausrichten der Außenmehrkant-Kupplung 151 des Werkzeugs 101. Dies ist gemäß einer Ausführungsform erforderlich, falls das Werkzeug 101 beim Überschieben eine von Fig. 5A abweichende Drehstellung aufweist, bei der illustrativ zwei diametral gegenüberliegende Kanten der Außenmehrkant-Kupplung 151, die beispielhaft mit 554, 555 gekennzeichnet sind, im Bereich der Federarme 503 bzw. 501 angeordnet sind. In diesem Fall werden die Federarme 501, 503 von der Außenmehrkant-Kupplung 151 um die Verschwenk- bzw. Biegestelle 504 in einander entgegengesetzte, von dem Werkzeug 101 wegweisende Richtungen gebogen, wobei der Verbindungsarm 502 elastisch verformt wird, sodass der Federarm 501 eine vorgegebene Federkraft in Richtung eines Pfeils 598 und der Federarm 503 eine vorgegebene Federkraft in Richtung eines Pfeils 597 auf die Außenmehrkant-Kupplung 151 ausübt. Diese radial einwärts gerichteten Federkräfte führen zu einem Verdrehen des Werkzeugs 101 z. B. in Richtung eines Pfeils 599 in die in Fig. 5A gezeigte Drehstellung.

## Patentansprüche

1. Handwerkzeugmaschine (100) mit einer zur Aufnahme eines mit einer Außenmehrkant-Kupplung (151) versehenen Werkzeugs (101) ausgebildeten Werkzeugaufnahme (200), die eine zumindest abschnittsweise mit einem Drehmitnahmeprofil (212) versehene Innenaufnahme (210) aufweist und an einem zugeordneten Werkzeuggehäuse (111) vorgesehen ist, in dem ein trommelartiges Werkzeugwechselmagazin (120) mit mindestens einer Werkzeugkammer (199) zur Aufbewahrung des Werkzeugs (101) angeordnet ist, die mit der Werkzeugaufnahme (200) fluchtend ausrichtbar ist, um ein Überschieben des Werkzeugs (101) von der Werkzeugkammer (199) in die Innenaufnahme (210) oder von der Innenaufnahme (210) in die Werkzeugkammer (199) zu ermöglichen, wobei ein Ausrichtelement (500) zur Ausrichtung der Außenmehrkant-Kupplung (151) beim Überschieben des Werkzeugs (101) von der Werkzeugkammer (199) in die Innenaufnahme (210) vorgesehen ist, um ein Einschieben der Außenmehrkant-Kupplung (151) in das Drehmitnahmeprofil (212) der Innenaufnahme (210) zu ermöglichen, wobei das Ausrichtelement (500) ein Federelement (509) aufweist, das dazu ausgebildet ist, die Außenmehrkant-Kupplung (151) zur Ausrichtung mit einer zugeordneten Federkraft zu beaufschlagen, wobei die Werkzeugaufnahme (200) mindestens eine radiale Öffnung (299) aufweist, in die das Federelement (509) zumindest abschnittsweise eingreift, **dadurch gekennzeichnet, dass** das Federelement (509) mindestens einen ersten und einen zweiten Federarm (501, 503) aufweist, die über einen Verbindungsarm (502) miteinander verbunden sind und durch eine elastische Verformung des Verbindungsarms (502) in einander entgegengesetzte Richtungen verbiegbar sind.

2. Handwerkzeugmaschine nach Anspruch 1, **dadurch gekennzeichnet, dass** das Ausrichtelement (500) dazu ausgebildet ist, das Werkzeug (101) um dessen Längsachse (188) in eine Drehstellung zu verdrehen, in der die Außenmehrkant-Kupplung (151) und das Drehmitnahmeprofil (212) der Innenaufnahme zumindest im Wesentlichen deckungsgleich angeordnet sind.

3. Handwerkzeugmaschine nach Anspruch 1 oder 2, **dadurch gekennzeichnet, dass** das Federelement (509) nach Art einer Bügelfeder ausgebildet ist.

4. Handwerkzeugmaschine nach einem der vorhergehenden Ansprüche, **dadurch gekennzeichnet, dass** die radiale Öffnung (299) dazu ausgebildet ist, einen Zugriff des Federelements (509) auf die Außenmehrkant-Kupplung (151) zu ermöglichen.

5. Handwerkzeugmaschine nach Anspruch 4, **dadurch gekennzeichnet, dass** das Federelement (509) mindestens einen Federarm (501, 503) aufweist, der zumindest abschnittsweise in die radiale Öffnung (299) eingreift.

6. Handwerkzeugmaschine nach Anspruch 5, **dadurch gekennzeichnet, dass** der mindestens eine Federarm (501, 503) dazu ausgebildet ist, die Außenmehrkant-Kuppiung (151) in der Innenaufnahme (210) der Werkzeugaufnahme (200) mit einer radial einwärts gerichteten Federkraft zu beaufschlagen.

7. Handwerkzeugmaschine nach einem der vorhergehenden Ansprüche, **dadurch gekennzeichnet, dass** der erste und zweite Federarm (501, 503) im unverbogenen Zustand des Federelements (509) eine Beabstandung (595) voneinander aufweisen, die zumindest einer Beabstandung zwischen zwei gegenüberliegenden Seitenflächen (551, 552) der Außenmehrkant-Kupplung (151) entspricht.

## Claims

1. Hand power tool (100) having a tool receiver (200), which is realized to receive a tool (101) provided with an outer polygonal coupling (151) and which has an inner receiver (210) provided, at least portionally, with a rotary driver profile (212), and which is provided on an associated tool housing (111), in which there is disposed a drum-type tool change magazine (120) having at least one tool chamber (199) for storing the tool (101), which tool chamber can be aligned so as to be flush with the tool receiver (200), to enable the tool (101) to be slid over from the tool chamber (199) into the inner receiver (210) or from the inner receiver (210) into the tool chamber (199), wherein an alignment element (500) is provided for aligning the outer polygonal coupling (151) as the tool (101) is slid over from the tool chamber (199) into the inner receiver (210), to enable the outer polygonal coupling (151) to be slid into the rotary driver profile (212) of the inner receiver (210), wherein the alignment element (500) has a spring element (509), which is realized to apply an associated spring force to the outer polygonal coupling (151), for the purpose of alignment, wherein the tool receiver (200) has at least one radial opening (299), in which the spring element (509) engages, at least portionally, **characterized in that** the spring element (509) has at least one first and one second spring arm (501, 503), which are connected to each other via a connecting arm (502) and which can be bent in mutually opposite directions as a result of an elastic deformation of the connecting arm (502).

2. Hand power tool according to Claim 1, **characterized in that** the alignment element (500) is realized to turn the tool (101), about its longitudinal axis (188), into a rotary position in which the outer polygonal coupling (151) and the rotary driver profile (212) of the inner receiver are disposed in an at least substantially congruent manner.

3. Hand power tool according to Claim 1 or 2, **characterized in that** the spring element (509) is realized in the manner of a hoop spring.

4. Hand power tool according to any one of the preceding claims, **characterized in that** the radial opening (299) is realized to enable the spring element (509) to access the outer polygonal coupling (151).

5. Hand power tool according to Claim 4, **characterized in that** the spring element (509) has at least one spring arm (501, 503), which engages, at least portionally, in the radial opening (299).

6. Hand power tool according to Claim 5, **characterized in that** the at least one spring arm (501, 503) is realized to apply a radially inwardly directed spring force to the outer polygonal coupling (151) in the inner receiver (210) of the tool receiver (200).

7. Hand power tool according to any one of the preceding claims, **characterized in that**, when the spring element (509) is in the non-bent state, the first and the second spring arm (501, 503) are spaced apart from each other by a spacing (595) that corresponds at least to a spacing between two opposing side faces (551, 552) of the outer polygonal coupling (151).

## Revendications

1. Machine-outil à main (100) comprenant un logement d'outil (200) réalisé pour recevoir un outil (101) muni d'un accouplement à profil extérieur polygonal (151), qui présente un logement intérieur (210) pourvu au moins en partie d'un profil d'entraînement en rotation (212) et qui est prévu au niveau d'un boîtier d'outil associé (111), dans lequel est disposé un magasin de remplacement d'outil en forme de tambour (120) avec au moins une chambre d'outil (199) pour stocker l'outil (101), laquelle peut être orientée en alignement avec le logement d'outil (200) afin de permettre un transfert de l'outil (101) de la chambre d'outil (199) dans le logement intérieur (210) ou du logement intérieur (210) dans la chambre d'outil (199), un élément d'orientation (500) étant prévu pour orienter l'accouplement à profil extérieur polygonal (151) lors du transfert de l'outil (101) de la chambre d'outil (199) au logement intérieur (210), afin de permettre une insertion de l'accouplement à profil extérieur polygonal (151) dans le profil d'entraînement en rotation (212) du logement intérieur (210), l'élément d'orientation (500) présentant un élément de ressort (509) qui est réalisé pour solliciter l'accouplement à profil extérieur polygonal (151) pour l'orientation avec une force de ressort associée, le logement d'outil (200) présentant au moins une ouverture radiale (299) dans laquelle s'engage au moins en partie l'élément de ressort (509), **caractérisée en ce que** l'élément de ressort (509) présente au moins un premier et un deuxième bras de ressort (501, 503) qui sont connectés l'un à l'autre par le biais d'un bras de connexion (502) et qui peuvent être tordus dans des directions mutuellement opposées par déformation élastique du bras de connexion (502).

2. Machine-outil à main selon la revendication 1, **caractérisée en ce que** l'élément d'orientation (500) est réalisé de manière à faire tourner l'outil (101) autour de son axe longitudinal (188) dans une position de rotation dans laquelle l'accouplement à profil extérieur polygonal (151) et le profil d'entraînement en rotation (212) du logement intérieur sont disposés au moins essentiellement en coïncidence.

3. Machine-outil à main selon la revendication 1 ou 2, **caractérisée en ce que** l'élément de ressort (509) est réalisé à la manière d'un ressort en étrier.

4. Machine-outil à main selon l'une quelconque des revendications précédentes, **caractérisée en ce que** l'ouverture radiale (299) est réalisée de manière à permettre un accès de l'élément de ressort (509) à l'accouplement à profil extérieur polygonal (151).

5. Machine-outil à main selon la revendication 4, **caractérisée en ce que** l'élément de ressort (509) présente au moins un bras de ressort (501, 503) qui s'engage au moins en partie dans l'ouverture radiale (299).

6. Machine-outil à main selon la revendication 5, **caractérisée en ce que** l'au moins un bras de ressort (501, 503) est réalisé de manière à solliciter l'accouplement à profil extérieur polygonal (151) dans le logement intérieur (210) du logement d'outil (200) avec une force de ressort orientée radialement vers l'intérieur.

7. Machine-outil à main selon l'une quelconque des revendications précédentes, **caractérisée en ce que** le premier et le deuxième bras de ressort (501, 503) présentent, dans l'état non tordu de l'élément de ressort (509), un espacement (595) l'un de l'autre qui correspond au moins à un espacement entre deux faces latérales opposées (551, 552) de l'accouplement à profil extérieur polygonal (151).
